# EUROPÄISCHE PATENTSCHRIFT

(11) **EP 1 242 505 B1**
(45) Veröffentlichungstag und Bekanntmachung des Hinweises auf die Patenterteilung: **18.06.2003**
(21) Anmeldenummer: 00979562.6
(22) Anmeldetag: 15.11.2000
(51) Int. Cl.: C08G 69/00, C08G 69/14, C08G 69/26, C08G 69/36, C08G 69/04

(54) **VERFAHREN ZUR KONTINUIERLICHEN HERSTELLUNG VON COPOLYAMIDEN, DIE AUF EINEM LACTAM (I), EINEM DIAMIN (II) UND EINER DICARBONSÄURE (III) BASIEREN**
METHOD FOR THE CONTINUOUS PRODUCTION OF COPOLYAMIDES BASED ON A LACTAME (I), A DIAMINE (II) AND A DICARBOXYLIC ACID (III)
PROCEDE DE PRODUCTION CONTINUE DE COPOLYAMIDES A BASE D'UN LACTAME (I), D'UNE DIAMINE (II) ET D'UN ACIDE DICARBOXILIQUE (III)

(30) Priorität: 30.11.1999 DE 19957663
(43) Veröffentlichungstag der Anmeldung: 25.09.2002
(73) Patentinhaber: BASF AKTIENGESELLSCHAFT, 67056 Ludwigshafen (DE)
(72) Erfinder: DEININGER, Jürgen, 68723 Oftersheim (DE); GÖTZ, Walter, 67067 Ludwigshafen (DE); LUDWIG, Alfons, 37671 Höxter (DE); PIPPER, Gunter, 67098 Bad Dürkheim (DE)
(86) Internationale Anmeldenummer: EP0011277
(87) Internationale Veröffentlichungsnummer: WO01040355

(56) Entgegenhaltungen:
- EP-A- 0 098 412
- EP-A- 0 393 546
- US-A- 4 963 646
- US-A- 5 223 196

## Beschreibung

Die vorliegende Erfindung betrifft ein Verfahren zur kontinuierlichen Herstellung von Copolyamiden, die auf einem Lactam (I), einem Diamin (II) und einer Dicarbonsäure (III) basieren, dadurch gekennzeichnet, daß man
eine Mischung (IV) enthaltend ein Diamin (II), eine Dicarbonsäure (III) und Wasser wobei die Mischung (IV) zusätzlich ein Lactam (I) enthält, mit der Maßgabe, daß der molare Gehalt der Mischung (IV) an Lactam (I) kleiner ist als der molare Gehalt der Mischung (VI) an Lactam (I), in einem ersten Reaktionsbereich bei einem Druck im Eingangsbereich des Reaktionsbereichs im Bereich von 1,3*10⁵ bis 2,5*10⁵ Pa, einer Temperatur oberhalb des Schmelzpunktes des Polymers (V) und einem Umsetzungsgrad, bezogen auf die molaren Mengen an Diamin (II) und Dicarbonsäure (III), von mindestens 80 % zu einem Polymer (V) umsetzt,
eine Mischung (VI) enthaltend Lactam (I) und Wasser wobei die Mischung (VI) zusätzlich ein Diamin (II) und eine Dicarbonsäure (III) enthält, mit der Maßgabe, daß der molare Gehalt der Mischung (IV) an Diamin (II) und Dicarbonsäure (III) kleiner ist als der molare Gehalt der Mischung (VI) an Diamin (II) und Dicarbonsäure (III), in einem zweiten Reaktionsbereich bei einem Druck im Eingangsbereich des Reaktionsbereichs im Bereich von 5*10⁵ bis 40*10⁵ Pa, einer Temperatur oberhalb des Schmelzpunktes des Polymers (VII) und einem Umsetzungsgrad, bezogen auf die molaren Menge an Lactam (I), von mindestens 80 % zu einem Polymer (VII) umsetzt,
anschließend Polymer (V) und Polymer (VII) in einer dritten Reaktionszone bei einem Druck im Eingangsbereich des Reaktionsbereichs im Bereich von 1*10⁵ bis 1,5*10⁵ Pa miteinander bei Temperaturen oberhalb des Schmelzpunktes des Polymers (VIII) zu einem Polymer (VIII) umsetzt, wobei das Polymer (VIII) einen Gehalt an mit Wasser bei einer Temperatur von 95°C extrahierbaren Bestandteilen, bezogen auf Lactam (I), Diamin (II) und Dicarbonsäure (III), von höchstens 10 Gew.-% aufweist, und
anschließend mit Wasser das Polymer (VIII) extrahiert unter Erhalt des Copolyamids.

Ferner betrifft die vorliegende Erfindung nach diesem Verfahren erhältliche Copolyamide, ihre Verwendung zur Herstellung von Fasern, Flächengebilden und Formkörpern, sowie Fasern, Flächengebilde und Formkörper, die auf diesen Copolyamiden basieren. Verfahren zur kontinuierlichen Herstellung von Copolyamiden aus Lactamen, wie Caprolactam, und äquimolaren Mengen an Diaminen und Dicarbonsäuren, wie Hexamethylendiamin-adipat ("AH-Salz"), sind allgemein bekannt.

DD 110 507 beschreibt ein solches Verfahren, bei dem man einem senkrecht angeordneten Rohr ("VK-Rohr") von oben Caprolactam, AH-Salz und Wasser zuführt, in dem Rohr bei erhöhter Temperatur und erhöhtem Druck die Polymerisation durchführt, wobei man gleichzeitig die Reaktionsmasse in dem Rohr nach unten führt, und unten das entsprechende Copolyamid entnimmt. Nachteilig bei diesem Verfahren ist, daß am Kopf des VK-Rohres Dämpfe entweichen; hierdurch ist eine konstante und zugleich hohe Produktqualität schlecht einzustellen ist, da mit den Dämpfen auch Diamin ausgetragen wird und zudem eine präzise Temperaturführung im Kopfbereich des VK-Rohres erschwert wird. Außerdem kann über den Kopf des VK-Rohres nur eine geringe Wärmemenge in das Reaktionssystem eingebracht werden, so daß nach diesem Verfahren nur geringe Mengen an Diamin und Dicarbonsäure in das Copolyamid eingebaut werden. Das Verfahren hat ferner den Nachteil, daß hohe Verweilzeiten der Reaktionsmischung im VK-Rohr von ca. 19 Stunden erforderlich sind, um wirtschaftliche Umsätze und Copolyamide mit marktüblichen Produkteigenschaften zu erhalten.

Aus EP-A-0 098 412 ist ein Verfahren zur Herstellung von Copolyamiden bekannt, gemäß dessen, zur Vermeidung eines Erstarrens der Reaktionsmasse durch das Verdampfen des Reaktionswassers, bei Atmosphärendruck eine wäßrige AH-Salz-Lösung zu einer entsprechenden Präpolymerisatschmelze kontinuierlich gegeben und gleichzeitig das Wasser abdestilliert wird, wobei die Temperatur der Präpolymerisatschmelze einen bestimmten Mindestwert nicht unterschreiten soll. Die kontinuierlich entnommene Schmelze wird in an sich bekannter Weise bei Atmosphärendruck weiterkondensiert. Nachteilig ist bei diesem Verfahren ebenfalls die Einhaltung einer konstanten Temperatur aufgrund der Verdampfung des Reaktionswassers. Zudem treten bei der Vorkondensation Verluste an Diamin auf, so daß auch bei diesem Verfahren eine konstante und hohe Produktqualität schlecht einzustellen ist.

Aus EP-A-0 393 546 ist ein Verfahren bekannt, gemäß dessen eine wäßrige Lösung von äquimolaren Mengen eines Diamins und einer Dicarbonsäure unter leicht erhöhtem Druck und gleichzeitiger Verdampfung von Wasser durch einen rohrförmigen Reaktor unter Bildung einer Dampfphase und eines Präpolymeren geleitet wird. Die Präpolymerschmelze wird anschließend mit geschmolzenem Caprolactam gemischt und von oben nach unten durch ein VK-Rohr unter Bildung eines Copolyamids geleitet. Die am Eingang des VK-Rohres entstehenden Brüden werden in einer Destillationskolonne aufgetrennt, wobei Wasserdampf über den Kopf der Kolonne abgeführt und eine Diamin enthaltende wäßrige Lösung in die Polymerisation zurückgeführt wird. Nachteilig bei diesem Verfahren ist die geringe Flexibilität hinsichtlich der Herstellung von Copolyamiden unterschiedlicher Morphologie, also der Verteilung der Einheiten basierend auf Caprolactam und der Einheiten basierend auf Diamin und Dicarbonsäure innerhalb des Copolyamids, bei gleicher summarischer Zusammensetzung. Außerdem weist das Verfahren mit Verweilzeiten im VK-Rohr von 8 bis 14 Stunden als Nachteil eine nur geringe Raum-Zeit-Ausbeute auf.

Der vorliegenden Erfindung lag die Aufgabe zugrunde, ein Verfahren zur kontinuierlichen Herstellung von Copolyamiden, die auf Lactam, Diamin und Dicarbonsäure basieren, bereitzustellen, das die Herstellung solcher Copolyamide auf technisch einfache und wirtschaftliche Weise unter Vermeidung der genannten Nachteile ermöglicht.

Demgemäß wurden das eingangs definierte Verfahren, nach diesem Verfahren erhältliche Copolyamide, die Verwendung solcher Copolyamide zur Herstellung von Fasern, Flächengebilden und Formkörpern, sowie Fasern, Flächengebilde und Formkörper, basierend auf solchen Copolyamiden, gefunden.

Als Lactam (I) können einzeln oder im Gemisch prinzipiell alle Lactame, d.h. cyclische Verbindungen, die mindestens eine Amidgruppe im Cyclus aufweisen, oder Aminocarbonsäuren, d.h. Verbindungen, die sowohl mindestens eine Amino- als auch mindestens eine Carboxylgruppe aufweisen, eingesetzt werden.

Unter den Aminocarbonsäuren sind die omega-Aminocarbonsäuren bevorzugt, wobei unter letzteren insbesondere omega-Aminocarbonsäuren mit 4 bis 12 C-Atomen, weiter bevorzugt 4 bis 9 C-Atomen im Alkylrest, oder eine Aminoalkylarylcarbonsäure mit 8 bis 13 C-Atomen im Alkylrest eingesetzt werden, wobei dort solche bevorzugt werden, die zwischen der aromatischen Einheit und der Aminound Carboxylgruppe eine Alkylengruppe mit mindestens einem C-Atom aufweisen. Unter den Aminoalkylarylcarbonsäuren sind insbesondere solche bevorzugt, die die Amino- und Carboxylgruppe in 1,4-Stellung zueinander aufweisen.

Als omega-Aminocarbonsäure setzt man weiter bevorzugt lineare omega-Aminocarbonsäuren ein, wobei der Alkylenrest (-CH₂-) vorzugsweise 4 bis 14, weiter bevorzugt 4 bis 9 C-Atome enthält, wie 4-Amino-1-butancarbonsäure, 5-Amino-l-pentancarbonsäure, 6-Amino-1-pentancarbonsäure (6-Aminocapronsäure), 7-Amino-1-hexancarbonsäure, 8-Amino-1-heptancarbonsäure, 9-Amin-1-octancarbonsäure, 10-Amino-1-nonancarbonsäure, besonders bevorzugt 6-Aminocapronsäure.

Soweit aus solchen Aminocarbonsäuren Lactame durch Bildung eines cyclischen, vorzugsweise inneren Amids erhalten werden können, kommt der Einsatz solcher Lactame vorteilhaft in Betracht, wobei man weiter bevorzugt Lactame linearer omega-Aminocarbonsäuren einsetzt ,deren Alkylenrest (-CH₂-) vorzugsweise 4 bis 14, weiter bevorzugt 4 bis 9 C-Atome enthält, wie das Lactam der 4-Amino-1-butancarbonsäure, der 5-Amino-1-pentancarbonsäure, der 6-Amino-1-pentancarbonsäure (Caprolactam), der 7-Amino-1-hexancarbonsäure, der 8-Amino-1-heptancarbonsäure, der 9-Amin-1-octancarbonsäure, der 10-Amino-1-nonancarbonsäure, besonders bevorzugt Caprolactam.

Selbstverständlich können auch Gemische mehrerer Lactame, mehrere Aminocarbonsäuren oder Gemische eines oder mehrere Lactame mit einer oder mehreren Aminocarbonsäuren eingesetzt werden.

Gewünschtenfalls kann man auch Lactame oder Aminocarbonsäuren, die sich von verzweigten Alkylen- oder Arylen- oder Alkylarylenen ableiten, verwenden.

Als Diamin (II) können einzeln oder im Gemisch prinzipiell alle Diamine, d.h. Verbindungen mit mindestens zwei Aminogruppen eingesetzt werden, wie aromatische Amine, beispielsweise 1,4-Phenylendiamin oder 4,4'-Diaminodiphenylpropan, oder aliphatische Amine. Unter diesen sind die alpha,omega-Diamine bevorzugt, wobei unter letzteren insbesondere alpha,omega-Alkylendiamine mit 3 bis 14 C-Atomen, weiter bevorzugt 3 bis 10 C-Atomen im Alkylenrest, oder Alkylaryldiamine mit 9 bis 14 C-Atomen im Alkylrest eingesetzt werden, wobei dort solche bevorzugt werden, die zwischen der aromatischen Einheit und den beiden Aminogruppen eine Alkylengruppe mit mindestens einem C-Atom aufweisen, wie p-Xylylendiamin oder bevorzugt m-Xylylendiamin.

Als alpha,omega-Diamine setzt man weiter bevorzugt lineare alpha,omega-Diamine ein, wobei der Alkylenrest (-CH₂-) vorzugsweise 3 bis 14, weiter bevorzugt 3 bis 10 C-Atome enthält, wie 1,3-Diaminopropan, 1,4-Diaminobutan, 1,5-Diaminopentan, 1,6-Diaminohexan (Hexamethylendiamin, HMD), 1,7-Diaminoheptan, 1,8-Diaminooctan, 1,9-Diaminononan, 1,10-Diaminodecan, besonders bevorzugt Hexamethylendiamin.

Hexamethylendiamin kann nach an sich bekannten Verfahren durch doppelte katalytische Hydrierung der Nitrilgruppen von Adipodinitril erhalten werden.

Selbstverständlich können auch Gemische mehrerer Diamine eingesetzt werden.

Gewünschtenfalls kann man auch Diamine, die sich von verzweigten Alkylen- oder Arylen- oder Alkylarylenen ableiten, verwenden, wie 2-Methyl-1,5-Diaminopentan.

Als Dicarbonsäuren (III) können einzeln oder im Gemisch prinzipiell alle Dicarbonsäuren, d.h. Verbindungen mit mindestens zwei Carboxylgruppen eingesetzt werden. Unter diesen sind die alpha,omega-Dicarbonsäuren bevorzugt, wobei unter letzteren insbesondere alpha,omega-Alkylendicarbonsäuren mit 3 bis 14 C-Atomen, weiter bevorzugt 3 bis 12 C-Atomen im Alkylenrest, oder eine aromatische C₈-C₁₂-Dicarbonsäure wie Isophthalsäure, insbesondere Terephtalsäure, sowie eine C₅-C₈-Cycloalkandicarbonsäure wie Cyclohexandicarbonsäure eingesetzt werden.

Als alpha,omega-Dicarbonsäuren setzt man weiter bevorzugt lineare alpha, omega-Dicarbonsäuren ein, wobei der Alkylenrest (-CH₂-) vorzugsweise 2 bis 14, weiter bevorzugt 3 bis 12 C-Atome enthält, wie Ethan-1,2-dicarbonsäure (Bernsteinsäure), Propan-1,3-dicarbonsäure (Glutarsäure), Butan-1,4-dicarbonsäure (Adipinsäure), Pentan-1,5-dicarbonsäure (Pimelinsäure), Hexan-1,6-dicarbonsäure (Korksäure), Heptan-1,7-dicarbonsäure (Azelainsäure), Octan-1,8-dicarbonsäure (Sebazinsäure), Nonan-1,9-dicarbonsäure, Decan-1,10-dicarbonsäure, besonders bevorzugt Adipinsäure.

Adipinsäure kann nach an sich bekannten Verfahren durch Oxidation von Cyclohexan erhalten werden.

Selbstverständlich können auch Gemische mehrerer Dicarbonsäuren eingesetzt werden.

Gewünschtenfalls kann man auch Dicarbonsäuren, die sich von verzweigten Alkylen- oder Arylen- oder Alkylarylenen ableiten, verwenden.

Das molekulare Verhältnis von Diamin und Dicarbonsäure in Mischung (IV), Mischung (VI), sofern Mischung (VI) Diamin (II) und Dicarbonsäure (III) enthält, und dem erfindungsgemäß erhältlichen Copolyamid, wobei bei den nachfolgenden Mengenangaben unter Diamin die Summe aus Diamin (II) und gegebenenfalls eingesetzten Diamin-Äquivalenten, also Verbindungen, die unter den erfindungsgemäßen Verfahrensbedingungen wie ein Diamin reagieren, verstanden werden und unter Dicarbonsäure die Summe aus Dicarbonsäure (III) und gegebenenfalls eingesetzten Dicarbonsäure-Äquivalenten, also Verbindungen, die unter den erfindungsgemäßen Verfahrensbedingungen wie eine Dicarbonsäure reagieren, wie Dinitrile, verstanden werden, sollte vorteilhaft zwischen 0,8 und 1,2, vorzugsweise 0,95 bis 1,05, besonders bevorzugt zwischen 0,98 und 1,02 (äquimolar) betragen.

Die Mischung (IV) enthält erfindungsgemäß ein Diamin (II) und eine Dicarbonsäure (III), wobei alle Diamine (II) und Dicarbonsäuren (III) zusammen eingesetzt werden können. Bevorzugte Kombinationen aus Diamin (II) und Dicarbonsäure (III) sind die Kombinationen Hexamethylendiamin mit Adipinsäure (AH-Salz), Hexamethylendiamin mit Sebazinsäure, Hexamethylendiamin mit Isophthalsäure, Hexamethylendiamin mit Isophthalsäure und Terephthalsäure, m-Xylylendiamin mit Adipinsäure, vorzugsweise Hexamethylendiamin mit Adipinsäure.

Erfindungsgemäß setzt man die Mischung (IV) als wäßrige Lösung von Diamin (II) und Dicarbonsäure (III) ein. Vorteilhaft sollte der Gehalt der Mischung (IV) an der Summe aus Diamin (II) und Dicarbonsäure (III) zwischen 30 bis 70 Gew.-%, insbesondere 50 bis 65 Gew.-% liegen.

Die Mischung (IV) enthält zusätzlich ein Lactam (I), mit der Maßgabe, daß der molare Gehalt der Mischung (IV) an Lactam (I) kleiner ist als der molare Gehalt der Mischung (VI) an Lactam (I). Vorteilhafter Weise enthält Mischung (IV) bis zu 20 Gew.-%, insbesondere bis zu 15 Gew.-% Lactam (I) bezogen auf Mischung (IV).

Die Mischung (VI) enthält neben Lactam (I) Wasser. Vorteilhaft sollte der Gehalt an Wasser 0,5 bis 10 Gew.-%, insbesondere 2 bis 7 Gew.-% bezogen auf Mischung (VI) betragen.

Die Mischung (VI) kann zusätzlich ein Diamin (II) und eine Dicarbonsäure (III) enthalten, mit der Maßgabe, daß der molare Gehalt der Mischung (IV) an Diamin (II) und Dicarbonsäure (III) kleiner. ist als der molare Gehalt der Mischung (VI) an Diamin (II) und Dicarbonsäure (III). Vorteilhafter Weise enthält Mischung (VI) bis zu 15 Gew.-%, insbesondere bis zu 10 Gew.-% in Summe Diamin (II) und Dicarbonsäure (III) bezogen auf Mischung (VI). Besonders bevorzugt enthält die Mischung (VI) nicht zusätzlich ein Diamin (II) und eine Dicarbonsäure (III).

Als besonders vorteilhaft hat es sich erwiesen, wenn Mischung (IV) zusätzlich Lactam (I) enthält und Mischung (VI) nicht zusätzlich Diamin (II) und Dicarbonsäure (III) enthält.

Erfindungsgemäß setzt man eine Mischung (IV) bei einem Druck im Eingang des Reaktionsbereichs im Bereich von 1,3*10⁵ bis 2,5*10⁵ Pa, vorzugsweise 1,35*10⁵ bis 1,5*10⁵ Pa, einer Temperatur oberhalb des Schmelzpunkts des Polymers (V) im Bereich von 250 bis 350°C, vorzugsweise 255 bis 285°C, und einem Umsetzungsgrad, bezogen auf die molaren Mengen an Diamin (II) und Dicarbonsäure (III), von mindestens 80 %, insbesondere 86 bis 96 %, in einer ersten Reaktionszone um.

Die Reaktionszeiten sollten vorteilhaft zwischen 40 und 600 Sekunden betragen.

Dazu kann man die Mischung (IV) in an sich für Polymerisationen bekannten Reaktoren, vorzugsweise rohrförmigen Reaktoren, umsetzen.

Die Innenquerschnitte der rohrförmigen Reaktoren können rund oder periodisch wiederkehrend rund und spaltförmig ausgebildet sein. In solchen Reaktoren kommen insbesondere Reaktionszeiten von 40 bis 120 Sekunden in Betracht.

Die rohrförmigen Reaktoren können Füllungen, wie geordnete Einbauten oder lose Schüttungen, beispielsweise statische Mischer, Füllkörper, Raschigringe Pallringe, insbesondere Geweberinge vorzugsweise aus Drahtnetz, enthalten. Durch solche Füllungen kann die innere Oberfläche des Reaktors vergrößert werden.

In solchen Reaktoren kommen insbesondere Reaktionszeiten von 180 bis 600 Sekunden in Betracht.

Im allgemeinen erhält man nach der ersten Reaktionszone ein zweiphasiges Gemisch aus einer Flüssigphase enthaltend Polymer (V) und einer Gasphase enthaltend Wasser. Nach der ersten Reaktionszone trennt man vorteilhaft die Gasphase von der Flüssigphase ab.

Im allgemeinen enthält die Gasphase neben Wasser nicht umgesetzte Ausgangsverbindungen und Polymeraerosole. Nach Kondensation der Gasphase, vorzugsweise nach anschließender Aufkonzentration der so erhaltenen flüssigen Phase in Wasser und eine Lösung der Ausgangsverbindungen in an sich bekannter Weise, beispielsweise durch Extraktion, vorzugsweise Destillation, vorteilhaft in Kolonnen, wie Füllkörperkolonnen, Glockenbodenkolonnen oder Siebbodenkolonnen, wobei die Kolonnen vorteilhaft zwischen 5 und 15 theoretische Böden aufweisen, kann die die Ausgangsverbindungen enthaltene Lösung erneut zur Herstellung von Polymeren, beispielsweise durch Rückführung in die erste oder zweite Reaktionszone des erfindungsgemäßen Verfahrens, eingesetzt werden.

Das nach der ersten Reaktionszone erhaltene Polymer (V) weist im allgemeinen einen Wassergehalt von höchstens 2 Gew.-%, insbesondere von höchstens 0,5 Gew.-% auf.

Die relative Viskosität des Polymer (V), bestimmt in 1 %-iger Lösung in 96 %-iger Schwefelsäure bei 23°C, beträgt vorteilhaft 1,2 bis 1,3. Das Polymer weist vorzugsweise einen Carboxylendgruppengehalt von 300 bis 350 mmol/kg auf. Der Aminoendgruppengehalt beträgt vorteilhaft 300 bis 350 mmol/kg.

Erfindungsgemäß setzt man eine Mischung (VI) bei einem Druck im Bereich von 5*10⁵ bis 40*10⁵ Pa, vorzugsweise 15*10⁵ bis 25*10⁵ Pa, einer Temperatur oberhalb des Schmelzpunkts des Polymers (VII), und einem Umsetzungsgrad, bezogen auf die molaren Menge an Lactam (I), von mindestens 80 %, vorzugsweise mindestens 85 %, insbesondere mindestens 87 %, in einer zweiten Reaktionszone um. Die Reaktionszeiten sollten vorteilhaft zwischen 0,2 und 3 Stunden, insbesondere 0,2 bis 2 Stunden betragen.

Dazu kann man die Mischung (VI) in an sich für Polymerisationen bekannten Reaktoren, vorzugsweise rohrförmigen Reaktoren, umsetzen.

Die rohrförmigen Reaktoren können vorteilhaft geordnete Mischelemente, wie Sulzerpackungen, oder ungeordnete Mischelemente, wie Füllkörper, beispielsweise Raschigringe, Kugeln oder Pallringe, enthalten.

Die Temperatur der Reaktionsmischung sollte vorteilhaft so gewählt werden, daß das Reaktionsgemisch einphasig flüssig während der Reaktion vorliegt. Hierzu kommen beim Eintritt der Mischung (VI) in die zweite Reaktionszone vorteilhaft Temperaturen im Bereich von 230 bis 310°C, insbesondere 240 bis 290°C in Betracht.

Durch die üblicherweise exotherme Reaktion der Mischung (VI) zu dem Polymeren (VII) kann sich die Temperatur der Reaktionsmischung erhöhen, wobei Temperaturerhöhungen von 10 bis 50°C in Betracht kommen.

Die die zweite Reaktionszone verlassende Reaktionsmischung kann anschließend vorteilhaft adiabatisch entspannt werden, vorteilhaft auf einen Enddruck von 1*10⁵ Pa bis 1,5*10⁵ Pa, bevorzugt 1,05*10⁵ Pa bis 1,1*10⁵ Pa.

Bei dieser adiabatischen Entspannung verdampft im allgemeinen im Reaktionsgemisch enthaltenes Wasser. Hierdurch kühlt sich das Reaktionsgemisch ab. Die Temperatur der Reaktionsmischung nach der adiabatischen Entspannung beträgt üblicherweise 220 bis 300°C, vorzugsweise 230 bis 270°C.

Im allgemeinen enthält das bei der adiabatischen Verdampfung erhaltene Wasser nicht umgesetzte Ausgangsverbindungen, Polymeraerosole und Oligomere. Nach Kondensation der Gasphase, vorzugsweise nach anschließender Aufkonzentration der so erhaltenen flüssigen Phase in Wasser und eine Lösung der Ausgangsverbindungen, Polymeraerosole und Oligomere in an sich bekannter Weise, beispielsweise durch Extraktion, vorzugsweise Destillation, vorteilhaft in Kolonnen, wie Füllkörperkolonnen, Glockenbodenkolonnen oder Siebbodenkolonnen, wobei die Kolonnen vorteilhaft zwischen 5 und 15 theoretische Böden aufweisen, kann die die Ausgangsverbindungen, Polymeraerosole und Oligomere enthaltene Lösung erneut zur Herstellung von Polymeren, beispielsweise durch Rückführung in die erste oder zweite Reaktionszone des erfindungsgemäßen Verfahrens, eingesetzt werden.

Erfindungsgemäß setzt man Polymer (V) und Polymer (VII) in einer dritten Reaktionszone miteinander bei Temperaturen oberhalb des Schmelzpunktes des Polymers (VIII) zu einem Polymer (VIII) um, wobei das Polymer (VIII) einen Gehalt an mit Wasser bei einer Temperatur von 95°C extrahierbaren Bestandteilen, bezogen auf Lactam (I), Diamin (II) und Dicarbonsäure (III), von höchstens 10 Gew.-% aufweist.

Die Reaktionszeiten sollten vorteilhaft zwischen 3 und 8 Stunden, bevorzugt zwischen 5 und 6 Stunden, betragen.

Die Temperaturen sollten vorteilhaft zwischen 240 und 285°C, vorzugsweise zwischen 250 und 280°C, liegen.

Vorteilhafter Weise mischt man die Polymer (V) und Polymer (VII) vor der Umsetzung intensiv miteinander nach in an sich bekannte Weise, wie durch Rühren.

Die Umsetzung von Polymer (V) mit Polymer (VII) zu Polymer (VIII) kann man in an sich für Polymerisationen bekannten Reaktoren, vorzugsweise rohrförmigen Reaktoren, durchführen, wobei der rohrförmige Reaktor vorzugsweise senkrecht angeordnet ist. Dabei kann die Mischung aus Polymer (V) und Polymer(VII) am unteren, vorzugsweise am oberen Ende des Reaktors zugeführt werden.

Das nach der dritten Reaktionszone erhaltene Polymer (VIII) weist eine relative Viskosität, bestimmt in 1 %-iger Lösung in 96 %-iger Schwefelsäure bei 23°C, von vorzugsweise 2,0 bis 3,0 auf. Der Gehalt an mit Wasser bei 95°C extrahierbaren Anteilen beträgt 3,5 bis 10 Gew.-%, vorzugsweise 5 bis 8 Gew.-% bezogen auf Polymer (VIII). Der Gehalt an Triaminen beträgt in der Regel weniger als 0,06 Gew.-% bezogen auf Polymer (VIII).

Das nach der dritten Reaktionszone flüssige Polymer (VIII) kann in an sich bekannter Weise weiterverarbeitet werden, beispielsweise in Stränge gegossen, verfestigt und granuliert werden.

Erfindungsgemäß wird das Polymer (VIII) anschließend, vorzugsweise mit Wasser, extrahiert. Der Temperaturbereich von 80 bis 120°C hat sich hierbei als vorteilhaft erwiesen.

Die bei dieser Extraktion anfallende Lösung weist in der Regel einen Gehalt an organischen Bestandteilen von 4 bis 15 Gew.-% auf. In an sich bekannter Weise, beispielsweise durch Abdestillieren des Lösungsmittels in einer ein- der mehrstufigen Destillationsanlage, kann anschließend der Gehalt vorteilhaft auf 60 bis 90 Gew.-%, insbesondere 75 bis 85 Gew.-% aufkonzentriert werden.

Als vorteilhaft hat es sich erwiesen, vor der Aufkonzentrierung der Lösung Lactam (I) zuzusetzen. Hierdurch kann die Ausscheidung von Lactamoligomeren während des Aufkonzentrierens deutlich reduziert werden.

Es hat sich ebenfalls als vorteilhaft erwiesen, bei der Extraktion des Polymer (VIII) Lactam (I) zuzusetzen. Hierdurch kann die Extraktionsleistung verbessert werden. Dabei kommt vorteilhaft ein Verhältnis der zugesetzten Lactammenge zu reinem Extrakt im Bereich von 0,1 bis 4, bevorzugt 0,5 bis 1, bezogen auf den Extrakt, in Betracht. Ein solches Verfahren ist beispielsweise in DE-A-25 01 348 beschrieben.

Die bei der Extraktion erhaltene Lösung kann, vorzugsweise nach Auf konzentrierung, anschließend zur Polymerisation, beispielsweise durch Rückführung in den ersten oder zweiten Reaktionsbereich des erfindungsgemäßen Verfahrens, eingesetzt werden.

Das nach der Extraktion erhaltene Copolyamid trocknet man im allgemeinen anschließend in an sich bekannter Weise.

Vorteilhaft kann dies unter Mitverwendung von Inertgasen, wie Stickstoff oder überhitztem Wasserdampf, als Wärmeträger beispielsweise im Gegenstrom erfolgen. Hierbei kann die gewünschte Viskosität, bestimmt in 1 %-iger Lösung in 96 %-iger Schwefelsäure bei 23°C, durch Tempern bei erhöhter Temperatur, vorzugsweise bei 150 bis 185 °C, eingestellt werden.

Ferner kann man im Rahmen des erfindungsgemäßen Verfahrens auch eine Kettenverlängerung, Kettenregelung oder eine Verzweigung oder eine Kombination aus zwei oder drei solcher Maßnahmen durchführen. Dazu können dem Fachmann bekannte Substanzen zur Verzweigung, Kettenregelung bzw. Kettenverlängerung von Polymeren, wie monofunktionelle Amine oder Carbonsäuren oder trifunktionelle Amine oder Carbonsäuren, beispielsweise Propionsäure, Essigsäure, Benzoesäure oder Triacetondiamin, oder zwei- oder dreiwertige Isocyanate, wie Toluol-2,4-diisocyanat (TDI), Toluol-2,6-diisocyanat (TDI), 4,4'-Methylen-diphenyl-diisocyanat (MDI), 2,4'-Methylen-diphenyl-diisocyanat (MDI), p-Phenylen-diisocyanat (PDI), Naphthalin-1,5-diisocyanat (NDI), 1,6-Hexamethylen-diisocyanat (HDI), Isophoron-diisocyanat (IPDI), 4,4'-Dicyclohexylmethan-diisocyanat (H₁₂MDI), 1,4-Cyclohexan-diisocyanat (CHDI), Bis-(Isocyanatomethyl)-cyclohexan (H₆XDI, DDI), Tetramethylxylylen-diisocyanat (TMXDI), Triphenylmethan-triisocyanat vor, in oder nach den einzelnen Reaktionsstufen eingesetzt werden. Solche Verbindungen und ihr Einsatz sind beispielsweise in EP-A-0 345 648 beschrieben.

Ebenso können vor, in oder nach den einzelnen Reaktionsstufen für thermoplastische Polymere, insbesondere Polyamide, bekannte Zusatz- und Füllstoffe, wie Pigmente, Farbstoffe, Stabilisatoren, Schlagzähmodifier, Verarbeitungshilfsmittel, Oxidationsverzögerer, Mittel gegen Wärmezersetzung durch ultraviolettes Licht, Gleit- und Entformungsmittel, Flammschutzmittel, Weichmacher, eingesetzt werden. Deren Anteil beträgt im allgemeinen bis zu 40 Gew.-%, vorzugsweise bis zu 15 Gew.-%, bezogen auf das Gesamtgewicht der Zusammensetzung.

Das erfindungsgemäße Verfahren zeichnet sich durch eine hohe Flexibilität und eine gute Raum-Zeit-Ausbeute aus und ermöglicht die gezielte Herstellung von Copolyamiden mit unterschiedlicher Morphologie, wobei die erfindungsgemäßen Copolyamide eine gute Transparenz und hohen DSC-Schmelzpunkt bei äquimolaren Endgruppen, also gleicher molaren Anzahl an Säure- und Amino-Endgruppen, aufweisen.

Besonders bevorzugt sind dabei solche Copolyamide, die zwischen 70 und 95 Gew.-%, insbesondere 80 bis 90 Gew.-%, bezogen auf Copolyamid Polyamid 6-Einheiten aufweisen.

Diese Copolyamide können zur Herstellung von Fasern, Monofilamenten, Flächengebilden, wie Folien, oder Formköpern eingesetzt werden. Die Formkörper können dabei beispielsweise durch Spritzguß oder Extrusion erhalten werden.

## Patentansprüche

1. Verfahren zur kontinuierlichen Herstellung von Copolyamiden, die auf einem Lactam (I), einem Diamin (II) und einer Dicarbonsäure (III) basieren, **dadurch gekennzeichnet, daß** man
eine Mischung (IV) enthaltend ein Diamin (II), eine Dicarbonsäure (III) und Wasser, wobei die Mischung (IV) zusätzlich ein Lactam (I) enthält, mit der Maßgabe, daß der molare Gehalt der Mischung (IV) an Lactam (I) kleiner ist als der molare Gehalt der Mischung (VI) an Lactam (I), in einem ersten Reaktionsbereich bei einem Druck im Eingangsbereich des Reaktionsbereichs im Bereich von 1,3*10⁵ bis 2,5*10⁵ Pa, einer Temperatur oberhalb des Schmelzpunktes des Polymers (V) und einem Umsetzungsgrad, bezogen auf die molaren Mengen an Diamin (II) und Dicarbonsäure (III), von mindestens 80 % zu einem Polymer (V) umsetzt,
eine Mischung (VI) enthaltend Lactam (I) und Wasser, wobei die Mischung (VI) zusätzlich ein Diamin (II) und eine Dicarbonsäure (III) enthält, mit der Maßgabe, daß der molare Gehalt der Mischung (IV) an Diamin (II) und Dicarbonsäure (III) kleiner ist als der molare Gehalt der Mischung (VI) an Diamin (II) und Dicarbonsäure (III), in einem zweiten Reaktionsbereich bei einem Druck im Bereich von 5*10⁵ bis 40*10⁵ Pa, einer Temperatur oberhalb des Schmelzpunktes des Polymers (VII) und einem Umsetzungsgrad, bezogen auf die molaren Menge an Lactam (I), von mindestens 80 % zu einem Polymer (VII) umsetzt,
anschließend Polymer (V) und Polymer (VII) in einer dritten Reaktionszone bei einem Druck im Eingangsbereich des Reaktionsbereichs im Bereich von 1*10⁵ bis 1,5*10⁵ Pa miteinander bei Temperaturen oberhalb des Schmelzpunktes des Polymers (VIII) zu einem Polymer (VIII) umsetzt, wobei das Polymer (VIII) einen Gehalt an mit Wasser bei einer Temperatur von 95°C extrahierbaren Bestandteilen, bezogen auf Lactam (I), Diamin (II) und Dicarbonsäure (III), von höchstens 10 Gew.-% aufweist, und
anschließend mit Wasser das Polymer (VIII) extrahiert unter Erhalt des Copolyamids.

2. verfahren nach Anspruch 1, wobei man als Lactam (I) Caprolactam einsetzt.

3. Verfahren nach Anspruch 1 oder 2, wobei man als Diamin (II) Hexamethylendiamin einsetzt.

4. Verfahren nach den Ansprüchen 1 bis 3, wobei man als Dicarbonsäure (III) Adipinsäure einsetzt.

5. Verfahren nach den Ansprüchen 1 bis 4, wobei man Diamin (II) und Dicarbonsäure (III) in äquimolaren Mengen einsetzt.

## Claims

1. A process for continuous production of copolyamides based on a lactam (I), a diamine (II) and a dicarboxylic acid (III), which comprises
reacting a mixture (IV) comprising a diamine (II), a dicarboxylic acid (III) and water, said mixture (IV) further comprising a lactam (I) subject to the proviso that the molar amount of lactam (I) in said mixture (IV) is less than the molar amount of lactam (I) in a mixture (VI), in a first reaction zone at a pressure in the range from 1.3*10⁵ to 2.5*10⁵ Pa in the entry zone of the reaction zone and at a temperature above the melting point of polymer (V) to a conversion, based on the molar amounts of diamine (II) and dicarboxylic acid (III), of at least 80% to form a polymer (V),
reacting said mixture (VI) comprising lactam (I) and water, said mixture (VI) further comprising a diamine (II) and a dicarboxylic acid (III) subject to the proviso that the molar amount of diamine (II) and dicarboxylic acid (III) in said mixture (IV) is less than the molar amount of diamine (II) and dicarboxylic acid (III) in said mixture (VI), in a second reaction zone at a pressure in the range from 5*10⁵ to 40*10⁵ Pa and at a temperature above the melting point of polymer (VII) to a conversion, based on the molar amount of lactam (I), of at least 80% to form a polymer (VII),
then reacting polymer (V) and polymer (VII) with each other in a third reaction zone at a pressure in the range from 1*10⁵ to 1.5*10⁵ Pa in the entry zone of the reaction zone at temperatures above the melting point of polymer (VIII) to form a polymer (VIII), said polymer (VIII) having a 95°C water extractables content, based on lactam (I), diamine (II) and dicarboxylic acid (III), of not more than 10% by weight, and
then extracting the polymer (VIII) with water to obtain the copolyamide.

2. A process as claimed in claim 1, wherein lactam (I) is caprolactam.

3. A process as claimed in claim 1 or 2, wherein diamine (II) is hexamethylenediamine.

4. A process as claimed in any of claims 1 to 3, wherein dicarboxylic acid (III) is adipic acid.

5. A process as claimed in any of claims 1 to 4, wherein diamine (II) and dicarboxylic acid (III) are used in equimolar amounts.

## Revendications

1. Procédé de préparation en continu de copolyamides, à base d'un lactame (I), d'une diamine (II) et d'un acide dicarboxylique (III), **caractérisé en ce que**
on transforme en un polymère (V) un mélange (IV) contenant une diamine (II), un acide dicarboxylique (III) et de l'eau, le mélange (IV) contenant en supplément un lactame (I), à la condition que la teneur molaire du mélange (IV) en lactame (I) soit inférieure à la teneur molaire du mélange (VI) en lactame (I), dans une première zone réactionnelle à une pression dans la région d'entrée de la zone réactionnelle de l'ordre de 1,3·10⁵ à 2,5·10⁵ Pa, à une température supérieure au point de fusion du polymère (V) et à un degré de conversion, par rapport aux quantités molaires de diamine (II) et d'acide dicarboxylique (III), d'au moins 80%,
on transforme en un polymère (VII) un mélange (VI) contenant du lactame (I) et de l'eau, le mélange (VI) contenant en supplément une diamine (II) et un acide dicarboxylique (III), à la condition que la teneur molaire du mélange (IV) en diamine (II) et acide dicarboxylique (III) soit inférieure à la teneur molaire du mélange (VI) en diamine (II) et acide dicarboxylique (III), dans une deuxième zone réactionnelle à une pression de l'ordre de 5·10⁵ à 40·10⁵ Pa, à une température supérieure au point de fusion du polymère (VII) et à un degré de conversion, par rapport à la quantité molaire de lactame (I), d'au moins 80%,
puis on transforme en un polymère (VIII) le polymère (V) et le polymère (VII) dans une troisième zone réactionnelle à une pression dans la région d'entrée de la zone réactionnelle de l'ordre de 1·10⁵ à 1,5·10⁵ Pa, à des températures supérieures au point de fusion du polymère (VIII), le polymère (VIII) présentant une teneur en éléments, qui peuvent être extraits à l'eau à une température de 95°C, d'au maximum 10% en poids, par rapport au lactame (I), à la diamine (II) et à l'acide dicarboxylique (III), et
on extrait ensuite le polymère (VIII) avec de l'eau, avec obtention du copolyamide.

2. Procédé suivant la revendication 1, dans lequel, comme lactame (I), on met en oeuvre du caprolactame.

3. Procédé suivant l'une des revendications 1 et 2, dans lequel, comme diamine (II), on met en oeuvre de l'hexaméthylènediamine.

4. Procédé suivant l'une des revendications 1 à 3, dans lequel, comme acide dicarboxylique (III), on met en oeuvre de l'acide adipique.

5. Procédé suivant l'une des revendications 1 à 4, dans lequel on met en oeuvre la diamine (II) et l'acide dicarboxylique (III) en quantités équimolaires.
